# EUROPEAN PATENT SPECIFICATION

(11) **EP 1 244 236 B1**
(45) Date of publication and mention of the grant of the patent: **26.10.2005**
(21) Application number: 02004579.5
(22) Date of filing: 28.02.2002
(51) Int. Cl.: H04J 3/16

(54) **Format of elements forming downstream maps in point-multipoint systems with different physical modes**
Elementenformat zur Bildung von Abbildungen in Abwärtsrichtung in Punkt-zu-Mehrpunkt-Systemen mit verschiedenen physikalischen Modi
Format des éléments formant des tables de correspondance dans des systèmes point-à- multipoint avec de modes physicaux différents

(30) Priority: 23.03.2001 IT MI010618
(43) Date of publication of application: 25.09.2002
(73) Proprietor: Siemens Mobile Communications S.p.A., 20126 Milano (IT)
(72) Inventor: Cavalli, Giulio, 20161 Milano (IT); Licitra, Gaspare, 20064 Gorgonzola (IT); Santacesaria, Claudio, 20139 Milano (IT)
(74) Representative: Giustini, Delio

(56) References cited:
- EP-A- 1 017 244
- EP-A- 1 227 696
- "Access interface for fixed broadband access systems" IEEE 802.16.1-00/01R4, September 2000 (2000-09), page 4-6,77-81 XP002262343 New York - US

## Description

### FIELD OF THE INVENTION

The present invention finds particular application in radio transmission systems of the point-multipoint type, but also in other transmission fields on different physical layers, such as, for instance, optical fibre systems, coaxial cable systems, systems with copper physical support, generally defined copper twisted pair.

### BACKGROUND OF THE INVENTION

In transmission systems with point-multipoint topology, whichever is the typology of the used physical means, a 'master' station and one or more 'slave' stations called also 'terminals' are generally defined. The following depiction refers to point-multipoint radio systems even if it has not to be construed as restrictive, since the invention can be also applied to systems on other physical means such as, for instance, optical fibre or copper cable.

The communications of the master towards one or more slave stations take place on a channel, defined 'downstream' channel, inside which the master station multiplexes, generally time-division, the traffic for the different terminal stations.

The traffic of 'slave' stations towards the 'master' station takes place on another logical channel, called 'upstream' channel. This upstream channel can be frequency- or time-division separated from the downstream one, that is, transmissions in upstream direction can occur at the same radio frequency in different time slots or at different radio frequencies.

Other separation ways can be used between the upstream and downstream channels for other physical layers.

New generation radio systems can control more physical modes at the same time, that is the master station can send traffic to some terminals with a given physical mode and to other terminals with another physical mode. By the term physical mode it is intended the combination of modulation and error correction code (FEC). In other words, in these systems the master station can transmit with a different physical mode depending on the slave station the traffic is addressed to. Moreover, it is possible to change the physical mode during the normal operation of the system, separately for each slave station. Likewise, each slave station can transmit on the upstream channel towards the master station with a different physical mode, among those supported by the system.

The downstream channel, for management simplicity, is often organized with a temporal frame structure. Time portions dedicated to the transmission of each physical mode are identified in the downstream frame. The above-mentioned frame portions are not defined in advance, but have variable length frame by frame, and are dimensioned by the master station according to the traffic requirements present in that particular moment.

For instance, if from among four possible physical modes supported by the system, no traffic with the physical mode number three has to be sent to any station, no frame portion shall be assigned for the above-mentioned physical mode, avoiding useless waste of bandwidth. If, on the contrary, the physical mode number one is used for all the slave stations, the whole downstream frame shall be dedicated to this physical mode.

The number and type of physical modes, mentioned as an example, shall not be considered as a restrictive element, since the present invention is valid with any typology of physical modes and absolutely independent on their number.

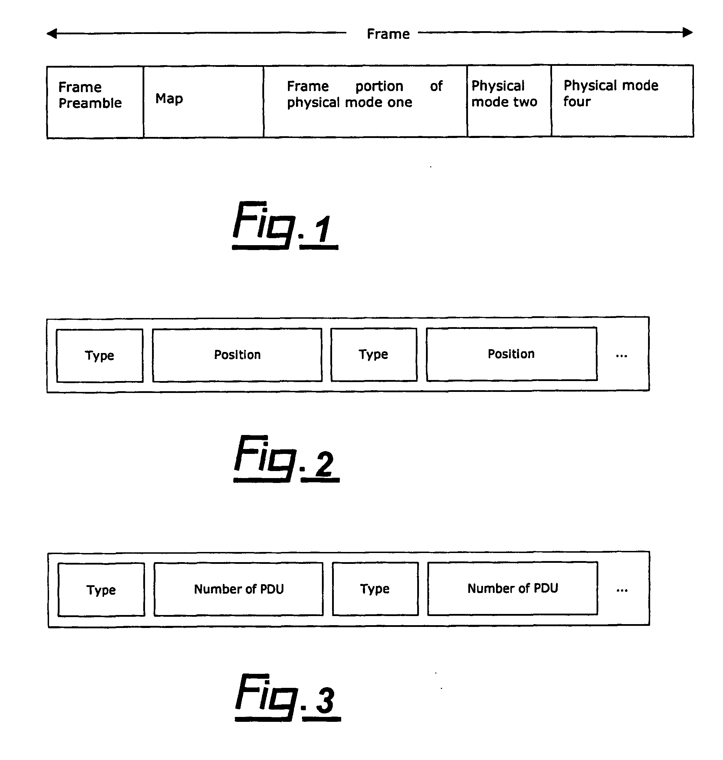

A slave station that, based on the radio channel conditions and on the distance from the master, is enabled to receive with a sub-set of the supported physical modes, must know in advance the beginning and the end of the downstream frame portion dedicated to each physical mode to be able to correctly interpret the received signal. Since the above mentioned frame portions transmitted with a given physical mode have variable length, it is necessary to supply the slave stations with the information in order that these can synchronize on the correct frame portion and thus be able to receive the traffic destined to the same. This information can be supplied through a descriptive map, placed at the frame beginning, in which it is specified which portions of the downstream frame are transmitted with the different physical modes. Figure 1 shows a possible frame format, in which after the frame preamble necessary for the synchronization, the map is transmitted. Afterwards different frame portions come next, one for each physical mode used in that frame. For simplicity, we have omitted other parts of the frame, not significant to the purposes of the present invention but necessary to the operation of a system.

The known art defines different formats of the mentioned downstream map. Various examples of said formats are known to the Applicant. For one of these examples, reference can be made to the draft of standard IEEE, group 802.16, concerning the on-air interface of broadband fixed radio access systems, published in September 2000 in document IEEE802.16.1-00/0124 under the title "access Interface for Fixed Broadband Access Systems".

In general, the map size is variable and depends on the number of elements contained in the same. The most common map format consists of a sequence of elements each one made of a couple of values, the first value identifying the type of physical mode used in a frame portion and the second value identifying the starting position of said portion inside the frame. The second field of the element in the map can be expressed in different ways, such as for instance in a number of bytes from the beginning of the frame. In other cases, it can be expressed in a number of symbols from the beginning of the frame, or with a different granularity and starting from a pre-set instant different from the frame beginning.

The European patent application EP-A-1227696, in the name of the same Applicant, discloses a method for the transmission of authorizations to use the upstream channel in point-to-multipoint systems with different physical modes. In these systems, the use of the upstream channel is coordinated by the master station, which assigns the authorizations to use the upstream channel to single terminals through appropriate authorization messages (grants). The method is valid when the upstream slots have not completely arbitrary duration but can assume only some discrete values, known in advance. Under this assumption, the grant message includes two fields: the usual "terminal identifier" field and a specific "Authorization type" field, including in its turn: first bits identifying the slot function and second bits identifying the PHY mode. Differently from the format of the map elements mentioned above, the format of the grant message does not include the starting position from the beginning of the frame. The terminal station addressed by the "terminal identifier" field will be able to obtain the length of each slot from the "Authorization type" field and will therefore obtain the starting position of the slot, that turns out to be transmitted in implicit mode. This apparent simplification entails in reality a constraint on the operation of the scheduler inside the master station which is not free to allocate (uplink) time slots of any duration.

### SCOPE AND SUMMARY OF THE INVENTION

This invention refers to the format of the downstream maps in point-multipoint systems of new generation operating with different physical modes and applies to systems in which information units, called also PDU, (Protocol Data Unit), having fixed length in bytes, are transmitted.

The featuring aspect of the invention consists in transmitting in each element of the downstream map, in addition to the identifier of the frame portion type, the number of fixed length PDUs contained in the portion instead of its position inside the frame. Said identifier will result shorter than the "starting position" information that was otherwise necessary in the systems preceding this invention. Therefore, the invention enables to reduce the overhead.

Each slave station could obtain the length of each frame portion from the "type" field and from the number of PDUs present in the portion; it could therefore obtain the starting position which turns out to be implicitly transmitted.

To overcome the dimensional limit of the field identifying the number of PDUs, more elements can be included in the map with the same Type field; in this way the length of the field identifying the number of PDUs has not to be dimensioned on the maximum number of PDUs per frame, but on the typical value; in the infrequent cases in which the number of PDUs at the same physical mode is higher, more map elements shall be used.

### BRIEF DESCRIPTION OF DRAWINGS

The invention, together with additional objects and advantages thereof can be understood from the following description accompanied with the attached drawings, in which:
**Figure 1** shows the frame structure in a point-multipoint system with adaptive physical modes.
**Figure 2** shows the format of the downstream map according to the known art.
**Figure 3** shows the structure of the downstream map according to the present invention.

### DESCRIPTION OF A PREFERRED EMBODIMENT OF THE INVENTION

Figure 2 shows the format of the downstream map according to the known art. Said format includes a set of elements that come one after the other. The elements forming the map are made of two fields: a "Type" field and a "Position" field.

The "Type" field univocally identifies the type of physical mode used in the frame portion it refers to. The "Position" field univocally determines the starting point of the portion inside the frame. The above mentioned field can be expressed in different ways, such as for instance the number of symbols from the frame starting, but it can be expressed also in other formats. The length of this field is therefore in relation with the granularity of this information and with the frame length. The finer is the granularity and longer is the frame, the larger shall be the "Position" field length.

According to the invention (figure 3) the "Position" field is implicitly expressed indicating how many PDUs are contained in the different frame portions.

In the assumption that the PDUs have fixed length, it is sufficient to indicate the number of the above mentioned PDUs. This information, associated to the type of physical mode used to transmit the PDU in a frame portion, enables to obtain the duration of said portion. In this way, to know when the transmission of a given physical mode starts, the slave station must add up the lengths of frame portions preceding the considered one. The so obtained value determines the distance, from the map end, of the frame portion for the transmission of the physical mode under examination.

In many practical cases, the "PDU Number" field shall be shorter compared to the one, preceding the invention, expressing the "Position". Therefore, the invention enables to have a lower overhead in the maps. In the known art, it is necessary that the "Position"-field is made of a sufficient number of bits, in order to be able to address each frame point on the basis of the granularity selected in the system. In a 1 or 2 ms frame, with a granularity of 4 symbols and a symbol frequency of 22 million symbols per second, it is reasonable to think to a "Position" field of minimum 14 or 16 bit.

Replacing the "Position" field by the "PDU Number" field, the bits necessary for the above-mentioned field of the map are reduced to a number sufficient to express the number of PDUs per frame; it is reasonable to think, for PDUs of approximately fifty bytes and 1 ms frames, to a "PDU Number" field of 8 bits. It is also possible to limit the number of the PDUs present in a frame portion, additionally reducing the dimensions of the above-mentioned field. This does not limit the functionalities of the system; in fact, if the system would have the need to allocate more PDUs than the extent allowed by the field length, it should be possible to include two consecutive elements in the map, indicating the same physical mode to which two consecutive frame portions with the same physical mode would correspond. It is true that in this situation, the overhead benefits would be reduced, since one more element is present in the map, but optimising the length of the "PDU Number" field, it is possible to manage in order that the probability that the system has to allocate more portions with the same physical mode in the same frame is very low.

In a preferred embodiment of the invention, referred to a practical case of point-multipoint radio transmission, the "Type" field is made of 4 bits identifying 16 different classes, each one identifying a function of the frame portion and a physical mode. The "PDU number" field consists of 8 bits limiting the number of PDUs allowed in a single frame portion to 256. Should the system have the need to allocate more than 256 PDU with the same physical mode in a same frame, two frame portions are assigned, according to the invention, for the same physical mode, with the consequent increase of the elements present in the map.

The present invention therefore enables to considerably reduce the map size.

Though the invention is described referring to some preferred embodiments, it is evident that variants and modifications are possible for a field technician.

It is evident that the present invention incorporates those alternative embodiments included in the protection of the following claims.

## Claims

1. Transmission system in point-multipoint topology including:
• a master station connected to one or more slave stations through at least a downstream transmission channel used by the master station to multiplex in time towards the plurality of slave stations division protocol data units, called PDUs, having fixed length in bytes;
• first means, allocated in the master station, suitable to either modulate or modulate and code the signal to transmit according to different physical modes;
• second means, allocated in the master station, suitable to subdivide the signal transmitted on the downstream channel into sequential temporal frames, each frame including different portions for allocating said fixed-length PDUs and each frame including a downstream channel description map said channel description map including a fixed or variable number of map elements each of said map elements including at least a first field (Type) whose value identifies the type of physical mode used in a frame portion associated to the map element,
**characterized in that** each map element includes a second field whose value is the number of PDUs allocated inside said frame portion associated to the map element, said second field being used by the slave stations in combination with said first field (Type) to derive the duration of said frame portion and consequently the starting position of the next frame portion from the beginning of the temporal frame.

2. The system of claim 1, **characterized in that** said first field (Type) may assume the same value for more consecutive elements of said description map.

3. The system of claim 1 or 2, **characterized in that** each element of said description map is a descriptor of a frame portion and the sequential order of the description map elements corresponds to the temporal order of the frame portions of which each map element is descriptor.

4. The system of claim 3, **characterized in that** each slave station includes means suitable to calculate the actual starting position of each said portion of the temporal frame summing up the time durations of all the previous said frame portions.

5. The system of any preceding claim, **characterized in that** said first field (Type) is coded in 4 bits.

6. The system of any preceding claim, **characterized in that** said second field is coded in 8 bits.

## Patentansprüche

1. Übertragungssystem in Punkt-zu-Mehrpunkt-Topologie, das Folgendes umfasst:
• eine Master-Station, die mit einer oder mehreren Slave-Station(en) über mindestens einen Übertragungskanal in Abwärtsrichtung (Abwärtskanal) verbunden ist, welcher von der Master-Station dafür genutzt wird, im Zeitmultiplexverfahren Protokolldateneinheiten, sog. PDU, die eine feste Länge in Byte haben, an die Mehrzahl der Slave-Stationen zu übertragen;
• ein erstes Mittel, das in der Master-Station enthalten ist und das geeignet ist, das zu übertragende Signal entsprechend verschiedenen physikalischen Modi zu modulieren bzw. zu modulieren und zu codieren;
• ein zweites Mittel, das in der Master-Station enthalten ist und geeignet ist, das auf dem Abwärtskanal übertragene Signal in aufeinander folgende Zeitrahmen zu unterteilen, wobei jeder dieser Rahmen verschiedene Abschnitte enthält, denen besagte Protokolldateneinheiten mit fester Länge zugewiesen werden können, und wobei jeder Rahmen eine Abbildung zur Beschreibung des Abwärtskanals enthält und besagte Abbildung zur Beschreibung des Abwärtskanals eine feste oder variable Anzahl von Abbildungselementen umfasst, und wobei jedes der besagten Abbildungselemente mindestens ein erstes Feld ("Typ") enthält, dessen Wert die Art des physikalischen Modus identifiziert, welcher in einem Abschnitt des Rahmens, der dem Abbildungselement zugeordnet ist, verwendet wird,
**dadurch gekennzeichnet, dass** jedes Abbildungselement ein zweites Feld beinhaltet, dessen Wert die Anzahl der Protokolldateneinheiten darstellt, die in dem besagten Rahmenabschnitt, welcher dem Abbildungselement zugeordnet ist, zugewiesen sind, wobei das besagte zweite Feld von den Slave-Stationen in der Kombination mit dem besagten ersten Feld ("Typ") dazu verwendet wird, die Länge des betreffenden Rahmenabschnitts und daraus resultierend die Startposition des nächsten Rahmenabschnitts gemessen ab Beginn des Zeitrahmens abzuleiten.

2. System gemäß Anspruch 1, **dadurch gekennzeichnet, dass** das besagte erste Feld ("Typ") für mehrere aufeinander folgende Elemente der besagten Abbildung zur Beschreibung des Abwärtskanals denselben Wert annehmen kann.

3. System gemäß Anspruch 1 oder 2, **dadurch gekennzeichnet, dass** jedes Element der besagten Abbildung zur Beschreibung des Abwärtskanals ein Deskriptor für einen Rahmenabschnitt ist und dass die Abfolge der Elemente der Abbildung zur Beschreibung des Abwärtskanals der zeitlichen Reihenfolge der Rahmenabschnitte entspricht, für die jedes Abbildungselement ein Deskriptor ist.

4. System gemäß Anspruch 3, **dadurch gekennzeichnet, dass** jede Slave-Station Mittel umfasst, welche geeignet sind, die tatsächliche Startposition jedes der besagten Abschnitte des Zeitrahmens zu berechnen, indem die Zeitdauer aller vorangegangenen besagten Rahmenabschnitte aufsummiert wird.

5. System gemäß einem der vorstehenden Ansprüche, **dadurch gekennzeichnet, dass** das besagte erste Feld ("Typ") in 4 Bits codiert ist.

6. System gemäß einem der vorstehenden Ansprüche, **dadurch gekennzeichnet, dass** das besagte zweite Feld in 8 Bits codiert ist.

## Revendications

1. Système de transmission à topologie point-à-multipoint comprenant :
• une station maîtresse reliée à une ou plusieurs stations asservies par au moins une voie de transmission à flux descendant utilisée par la station maîtresse pour multiplexer par division dans le temps vers la pluralité de stations asservies des unités de protocole de données, appelées PDU, ayant une longueur fixe en octets ;
• des premiers moyens, alloués dans la station maîtresse, adaptés pour soit moduler, soit moduler et coder le signal à transmettre selon différents modes physiques ;
• des seconds moyens, alloués dans la station maîtresse, adaptés pour subdiviser le signal transmis sur la voie à flux descendant en trames temporelles séquentielles, chaque trame comprenant différentes parties pour allouer lesdites PDU de longueur fixe et chaque trame comprenant une table de correspondances descriptive de voie à flux descendant, ladite table de correspondances descriptive de voie comprenant un nombre fixe ou variable d'éléments de table de correspondances, chacun desdits éléments de table de correspondances comprenant au moins un premier champ (Type) dont la valeur identifie le type de mode physique utilisé dans une partie de trame associée à l'élément de table de correspondances,
**caractérisé en ce que** chaque élément de table de correspondances comprend un second champ dont la valeur est le nombre de PDU allouées à l'intérieur de ladite partie de trame associée à l'élément de table de correspondances, ledit second champ étant utilisé par les stations asservies en association avec ledit premier champ (Type) pour dériver la durée de ladite partie de trame et en conséquence, la position de départ de la partie suivante de trame à partir du début de la trame temporelle.

2. Système selon la revendication 1, **caractérisé en ce que** ledit premier champ (Type) peut prendre la même valeur pour plusieurs éléments consécutifs de ladite table de correspondances descriptive.

3. Système selon la revendication 1 ou 2, **caractérisé en ce que** chaque élément de ladite table de correspondances descriptive est un descripteur d'une partie de trame et **en ce que** l'ordre séquentiel des éléments de la table de correspondances descriptive correspond à l'ordre temporel des parties de trame dont chaque élément de la table de correspondances est un descripteur.

4. Système selon la revendication 3, **caractérisé en ce que** chaque station asservie comprend des moyens adaptés pour calculer la position de départ réelle de ladite chaque partie de la trame temporelle en sommant les durées temporelles de toutes lesdites parties précédentes de trame.

5. Système selon l'une quelconque des revendications précédentes, **caractérisé en ce que** ledit premier champ (Type) est codé en 4 bits.

6. Système selon l'une quelconque des revendications précédentes, **caractérisé en ce que** ledit second champ est codé en 8 bits.
